(19) Europäisches Patentamt
European Patent Office
Office européen des brevets

(11) **EP 3 307 513 B1**

(12) **EUROPÄISCHE PATENTSCHRIFT**

(45) Veröffentlichungstag und Bekanntmachung des Hinweises auf die Patenterteilung:
**28.12.2022  Patentblatt 2022/52**

(21) Anmeldenummer: **16731817.9**

(22) Anmeldetag: **06.06.2016**

(51) Internationale Patentklassifikation (IPC):
*B29C 48/92* (2019.01)    *B29C 48/88* (2019.01)
*B29C 55/02* (2006.01)    *B29C 48/10* (2019.01)
*B29C 48/08* (2019.01)

(52) Gemeinsame Patentklassifikation (CPC):
**B29C 48/92; B29C 48/0018; B29C 48/08;**
**B29C 48/35; B29C 48/914;** B29C 48/10;
B29C 48/305; B29C 55/02; B29C 2948/92076;
B29C 2948/92209; B29C 2948/92219;
B29C 2948/92428; B29C 2948/92447;
B29C 2948/92571; B29C 2948/92923;    (Forts.)

(86) Internationale Anmeldenummer:
**PCT/EP2016/062810**

(87) Internationale Veröffentlichungsnummer:
**WO 2016/198359 (15.12.2016 Gazette 2016/50)**

(54) **VERFAHREN ZUR ONLINE-ÜBERWACHUNG EINER FOLIENQUALITÄT SOWIE FOLIENMASCHINE MIT EINER VORRICHTUNG ZUR ONLINE-ÜBERWACHUNG DER FOLIENQUALITÄT**

METHOD FOR THE ONLINE MONITORING OF FILM QUALITY AND FILM MACHINE COMPRISING A DEVICE FOR THE ONLINE MONITORING OF FILM QUALITY

PROCÉDÉ DE SURVEILLANCE EN LIGNE DE LA QUALITÉ D'UNE FEUILLE ET BOUDINEUSE POUR FEUILLES POURVUE D'UN DISPOSITIF DE SURVEILLANCE EN LIGNE DE LA QUALITÉ D'UNE FEUILLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2015   DE 102015109219**

(43) Veröffentlichungstag der Anmeldung:
**18.04.2018   Patentblatt 2018/16**

(73) Patentinhaber: **Windmöller & Hölscher KG**
**49525 Lengerich (DE)**

(72) Erfinder: **SCHMITZ, Torsten**
**48268 Greven (DE)**

(56) Entgegenhaltungen:
**EP-A1- 0 516 992      EP-A1- 0 522 278**
**EP-A1- 1 616 687      EP-A2- 0 006 110**
**JP-A- H11 192 660     US-A1- 2014 272 305**

EP 3 307 513 B1

(52) Gemeinsame Patentklassifikation (CPC): (Forts.)
B29C 2948/92942; B29L 2007/00

**Beschreibung**

Die Erfindung betrifft ein Verfahren zur Online-Überwachung einer Folienqualität bei einem Herstellungsprozess einer Kunststofffolie sowie eine Folienmaschine mit einer Vorrichtung zur Online-Überwachung einer Folienqualität bei einem Herstellungsprozess einer Kunststofffolie.

Aus dem Stand der Technik ist es bekannt, dass in einem Herstellungsprozess einer Kunststofffolie über eine Auslassvorrichtung fließfähiges Folienmaterial auf eine Transportvorrichtung, insbesondere eine Gießwalze durch einen länglichen Auslassspalt angeordnet wird. Die Transportvorrichtung wird in der Regel gekühlt, sodass während der Rotation und/oder Bewegung der Transportvorrichtung das Folienmaterial abgekühlt wird. Während der Abkühlung durchläuft das Folienmaterial ein Temperaturprofil und unterschreitet zu einem bestimmten Zeitpunkt seine eigene Erstarrungstemperatur, sodass es zu erstarren beginnt. Am Abnahmepunkt für das Folienmaterial an der Transportvorrichtung muss das Folienmaterial vollständig zu einer Folienbahn erstarrt sein.

Es hat sich gezeigt, dass der genannte Herstellungsprozess, insbesondere der Produktionsprozess für eine Kunststofffolie nur dann stabil ist, wenn die Qualitätsmerkmalsausprägungen der herzustellenden Folie nur zufällig streuen und wenn die Ausprägungen sich nur innerhalb von Grenzwerten bewegen. In diesem Fall wird von einem fähigen Prozess gesprochen. Unter anderem sind die mechanischen Eigenschaften der Kunststofffolie ein Hauptqualitätsmerkmal. Zur Überprüfung der mechanischen Eigenschaften ist es aus dem Stand der Technik bekannt, eine Offlinequalitätskontrolle durchzuführen, das bedeutet, dass Labortests während dem Anfahren der Folienmaschine und/oder auch während des Herstellungsprozesses in definierten Abständen durchgeführt werden. Dabei wird eine Probe der hergestellten Folie genommen und anschließend im Labor eine entsprechende Materialprüfung durchgeführt. Damit wird die Einstellphase für die Herstellung der Folie sowie die Qualitätssicherung gewährleistet. Das jeweilige Probeentnehmen sowie der aufwendige Einstellvorgang und die Überprüfung der Qualität während des Herstellungsprozesses führen jedoch zu reduzierter Gesamtqualität der Folie, zu einem hohen Aufwand hinsichtlich der Probeentnahme und nicht zuletzt zu einem hohen Ausschussmaterial bzw. einer großen Menge an sogenannter B-Ware.

Aus dem Dokument EP 0 522 278 A1 ist ein Verfahren zur Regelung des Durchmessers von in Blasfolienanlagen hergestellten Schlauchfolien bekannt.

Es ist Aufgabe der vorliegenden Erfindung, die voranstehend beschriebenen Nachteile zumindest teilweise zu beheben. Insbesondere ist es Aufgabe der vorliegenden Erfindung in kostengünstiger und einfacher Weise die Qualität der Folie zu verbessern, insbesondere Ausschuss zu reduzieren.

Die voranstehende Aufgabe wird gelöst durch ein Verfahren mit sämtlichen Merkmalen des Anspruches 1, sowie eine Folienmaschine mit sämtlichen Merkmalen des Anspruches 15. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Folienmaschine sowie jeweils umgekehrt, sodass bzgl. der Offenbarung zu den einzelnen Erfindungsaspekten stets wechselseitig Bezug genommen wird bzw. werden kann.

Das erfindungsgemäße Verfahren dient zum Online-Überwachen einer Folienqualität bei einem Herstellungsprozess einer Kunststofffolie, insbesondere einer Blasfolie oder einer Gießfolie. Bei dem erfindungsgemäßen Verfahren wird ein Folienmaterial aus einer Auslassvorrichtung in Form einer Schmelzfahne durch oder über eine Transportvorrichtung herausgeführt oder gezogen, wobei das Folienmaterial sich auf oder vor der Transportvorrichtung abkühlt. Bei der Transportvorrichtung kann es sich beispielsweise um eine Gießwalze/Chill Roll) handeln, um eine Gießfolie herzustellen. Ebenfalls ist es denkbar, das Verfahren in einer Blasfolienmaschine zu integrieren, bei der die Transportvorrichtung das Folienmaterial aus der Auslassvorrichtung herauszieht.

Hierbei kann die Transportvorrichtung derart ausgebildet sein, dass sich nach einer gewissen Zeit das Folienmaterial auf der Transportvorrichtung oder vor der Transportvorrichtung erstarrt. Zum Beispiel kann das erstarrte Folienmaterial an einem Abzugsort von der Transportvorrichtung entfernt werden. Das erfindungsgemäße Verfahren sieht erfindungsgemäß vor, dass eine Bestimmung einer Position einer Frostlinie erfolgt, bei der das Folienmaterial an der Transportvorrichtung, wenn bspw. eine Gießfolie hergestellt wird, oder vor der Transportvorrichtung, wenn eine Blasfolie hergestellt wird, erstarrt ist. Ebenfalls erfolgt eine Messung von mindestens einem in der Nähe der Frostlinie vorliegenden Prozessparameters des erstarrenden Folienmaterials. Das bedeutet, dass die Messung des soeben genannten Parameters vor oder an oder nach der Frostlinie erfolgen kann. Die Folie weist während der Online-Überwachung eine Transportrichtung auf, die zum Beispiel durch eine Rotation der Gießwalze bestimmt ist oder -im Falle der Blasfolie- die zur Transportvorrichtung orientiert ist, wobei im letztgenannten Beispiel die Transportvorrichtung das Folienmaterial nach oben, entgegengesetzt zum Blaskopf einer Blasfolienmaschine, zieht.

Das erfindungsgemäße Verfahren berechnet aufgrund der Kenntnis der Position der Frostlinie eine Relaxationsgröße, die die Relaxationen der Molekülorientierung des Folienmaterials berücksichtigt. Das erfindungsgemäße Verfahren überprüft anschließend, inwieweit die mindestens eine Relaxationsgröße innerhalb von Prozessgrenzen liegt. Dies ist ein Entscheidungskriterium während der Online-Überwachung bzgl. der Folienqualität.

Erfindungsgemäß hat sich herausgestellt, dass die vielfältigen Anforderungen an zu produzierenden Kunststofffolien, insbesondere Blasfolien, Gießfolien etc. reduziert werden können auf die mechanischen Folieneigenschaften, welche für den Zusammenhalt der Produkte/Ladungen relevant sind. Die mechanischen Eigenschaften werden durch die Rezeptur und die Prozessführung unter anderem bestimmt, insbesondere spielen hier die Orientierung der Folienschmelze, die Relaxation der Molekülorientierungen und die Kristallisation bis zum Erstarrungspunkt (Frostlinie) eine Rolle. Tests haben ergeben, dass über den Kennwert "Relaxation" gute Qualitätsaussagen bzgl. der herzustellenden Folie gemacht werden können. Besonders vorteilhaft ist, dass bei dem erfindungsgemäßen Verfahren die Relaxation des Folienmaterials entlang einer gesamten Transportstrecke in Transportrichtung beim Online-Überwachungsverfahren berücksichtigt wird, wobei die Transportstrecke zumindest von der Auslassvorrichtung bis zur Frostlinie sich erstreckt. Besonders vorteilhaft ist, dass durch die Nutzung von gemessenen Prozessparametern gemäß Schritt b) eine relative Relaxation des erstarrten Folienmaterials generiert werden kann, wobei im einfachsten Fall die relative Relaxation in Transportrichtung des Folienmaterials sich wie folgt berechnet:

$$O = A - (Rsf + Rcr),$$

wobei

A = durch das Abzugsverhältnis eingebrachtes Orientierungsniveau

Rsf = in der Schmelzfahne stattfindende Relaxation (der Orientierungen)

Rcr = vor oder auf der Transportvorrichtung stattfindenden Relaxation (der Orientierungen) ist.

Es hat sich gezeigt, dass diese Betrachtungsweise vorteilhaft sein kann, da diese ermöglicht, weitere relevante Einflussfaktoren qualitativ und gegebenenfalls auch quantitativ zu berücksichtigen. Es hat sich gezeigt, dass im Abzugsverhältnis sich eine initiale Orientierung des Folienmaterials sich dadurch wiederfindet, dass das Ausziehen der Schmelze von der "Dicke" eines Düsenspalts der Auslassvorrichtung, der beispielsweise zwischen 0,2mm bis 1mm, insbesondere 0,6mm und 1mm betragen kann, hin zur Foliendicke berücksichtigt wird, wobei die Foliendicke in einem Bereich beispielsweise zwischen 2μm und 80μm, insbesondere zwischen ungefähr 6μm und 35μm betragen kann.

Vorteilhafterweise werden in der Relaxationsgröße folgende Komponenten berücksichtigt:

- die nominale Relaxationszeit der Rezeptur, gegebenenfalls zusammengesetzt aus den nominalen Relaxationszeiten der einzelnen Rohstoffe
- die Verweilzeit in dem jeweiligen Bereich
- die während dieser Verweilzeit in der Schmelze vorliegende Temperatur und zwar über eine geeignete Beschreibung der starken Temperaturabhängigkeit der nominalen Relaxationszeit.

Vorteilhafterweise kann durch dieses Vorgehen die Liniengeschwindigkeit und das Temperaturniveau abgebildet werden, ebenso wie das spezifische Verhalten einer Rezeptur bzw. einzelner Rezepturkomponenten.

Vorteilhafterweise erfolgt die Messung des genannten Prozessparameters an der Frostlinie. Eine abweichende Messung, d.h. vor oder nach der Frostlinie, kann ebenfalls erfolgen. Beispielsweise kann die Messung bei ungefähr 70% der Transportstrecke zwischen Auslassvorrichtung bis zur Frostlinie ausreichen. Ebenfalls ist eine Messung bei 80% oder 90% oder 110% oder 130% denkbar, wobei die beiden letztgenannten Werte eine Messung nach der Frostlinie definieren.

Vorteilhafterweise wird bei dem erfindungsgemäßen Verfahren die starke temperaturabhängige Relaxation berücksichtigt, wobei die Länge von Auftreffen der Folienschmelze auf die Transportvorrichtung bis zum Erreichen der Frostlinie (Erstarrung) in eine geeignete Anzahl von Segmenten unterteilt werden kann und jedem Segment eine Verweilzeit sowie eine nominale Relaxationszeit zugeordnet werden kann. So kann die Relaxation, insbesondere die Relaxationsgröße des Folienmaterials in Transportrichtung nachgebildet bzw. abgebildet werden.

Besonders vorteilhaft hat sich erwiesen, dass besonders Kunststofffolien wie etwa Collation Shrink (Blasfolie), Shrink Hood (Blasfolie), Stretch Hood (Blasfolie) oder Stretch Film (Gießoder Blasfolie) entsprechend des erfindungsgemäßen Online-Überwachungsverfahrens analysiert werden können.

Unter einer Frostlinie ist im Sinne der vorliegenden Erfindung der Abschnitt in Transportrichtung oder auf der Transportvorrichtung, insbesondere im Folienmaterial zu verstehen, in welchem der Erstarrungsvorgang stattfindet. So wird ab einer gewissen Schmelztemperatur, die insbesondere in der Nähe der Erstarrungstemperatur des Folienmaterials liegt, sich die kristalline Struktur des Folienmaterials ändern und das gesamte Folienmaterial sich verfestigen und damit erstarren. Anschließend, also im weiteren Verlauf der Kontaktlänge des Folienmaterials in Transportrichtung oder auf der Transportvorrichtung, ist die Folienbahn erstarrt und nicht mehr fließfähig, sondern in einem festen Zustand. Dieser Übergangsbereich wird als Frostlinie bezeichnet.

Erfindungsgemäß kann vorgesehen sein, dass die Bestimmung der Position der Frostlinie gemäß Schritt a) zumindest teilweise mittels einer Temperaturbestimmung des Folienmaterials erfolgt. Die Temperaturbestimmung kann dabei ebenfalls berührend oder kontaktlos z. B. mit Hilfe von Infrarotmessung erfolgen. Hierbei sind ein oder mehrere Sensoren denkbar, die für die Temperaturbestimmung zum Einsatz kommen. Ebenfalls ist es erfindungsgemäß denkbar, dass die Frostlinie auf andere Weise festgestellt wird, beispielsweise durch eine Ultraschallüberwachung. Dies ist besonders vorteilhaft hinsichtlich einer berührungslosen Bestimmungsmöglichkeit. So kann aus Transmission, Adsorption und/oder Reflexion der Ultraschallstrahlung ein entsprechender Rückschluss auf die Frostlinie gezogen werden. Diese berührungslose und schnelle Bestimmung erfasst dabei insbesondere sich ausbildende kristalline Strukturen in dem Erstarrungsvorgang des Folienmaterials. Selbstverständlich ist diese Bestimmung der Frostlinie mit den in dieser Erfindung beschriebenen Bestimmungsmöglichkeiten frei kombinierbar, um z. B. eine höhere Geschwindigkeit oder eine höhere Genauigkeit der Bestimmung der Frostlinie erzielen zu können. Beispielsweise kann vorteilhaft sein, wenn bei einem erfindungsgemäßen Verfahren die Bestimmung der Frostlinie zumindest teilweise durch eine Markierungsvorrichtung, insbesondere eine Markierungswalze, durchgeführt wird, wobei geometrische Markierungen in das Erstarren des Folienmaterials eingebracht werden. So kann beispielsweise durch eine Markierungswalze ein mechanischer Einfluss auf das Folienmaterial erfolgen. Ist das Folienmaterial noch in einem fließfähigen Zustand, befindet es sich also noch vor der Frostlinie, so wird diese mechanische Beeinträchtigung geometrische Markierungen im Folienmaterial hinterlassen. In dieser Position der Markierungsvorrichtung ist das Folienmaterial also noch fließfähig vor der Frostlinie und hinterlässt jedoch die Markierungsvorrichtung keine sichtbaren Markierung mehr, so ist darauf zurückzuschließen, dass an dieser Position der Markierungsvorrichtung das Folienmaterial bereits ausreichend erkaltet ist. Diese Position befindet sich also hinter der Frostlinie. Mit diesem Verfahren kann vorteilhafterweise in iterativer Weise eine Auffindung der Frostlinie erfolgen. Dabei ist vorzugsweise die Kombination mit einer Kamera vorgesehen, welche in der Lage ist, Bediener unterstützt und voll automatisch die geometrischen Markierungen wahrzunehmen. Insbesondere ist für eine Iterationsmöglichkeit eine solche Markierungsvorrichtung in Transportrichtung der Transportvorrichtung oder in Transportrichtung zur Transportvorrichtung bewegbar angeordnet.

Die Transportvorrichtung kann beispielsweise eine Gießwalze bzw. ein Chill Roll sein. Die Transportvorrichtung ist vorteilhafterweise zylinderförmig ausgestaltet, wobei diese um eine Rotationsachse drehbar gelagert sind. Diese Transportvorrichtung rotiert also während des gesamten Verfahrens für den entsprechenden Transport und die Kühlung des auf ihre Oberfläche angeordneten Folienmaterials. Die Bestimmung der Frostlinie erstreckt sich vorzugsweise ebenfalls zumindest über einen Abschnitt dieser axialen Richtung quer zur Förderrichtung/Transportrichtung des Folienmaterials. Bevorzugt wird eine Frostlinie punktuell oder sogar kontinuierlich über die gesamte Länge der axialen Ausrichtung der Gießwalze oder des Chill Rolls bestimmt. Damit wird es möglich, zusätzliche Nachteile zu erkennen bzw. Qualitätsmängeln vorzubeugen.

Des Weiteren kann die Erfindung mitumfassen, dass mehrere Messstellen vorgesehen sind, um Prozessparameter zu messen. Die Qualität der Online-Überwachung kann dadurch verbessert werden, dass mehrere Messstellen innerhalb des Verfahrens integriert sind, um mindestens einen Prozessparameter zu messen, der für die Ermittlung der Relaxationsgröße relevant ist. Vorteilhafterweise befinden sich die mehreren Messstellen in axialer Richtung quer zur Transportvorrichtung des Folienmaterials, sodass über die Breite des Folienmaterials die Prozessparameter gemessen werden. Für jede Messstelle kann vorteilhafterweise eine Relaxationsgröße berechnet werden, sodass an unterschiedlichen Breiten des Folienmaterials quer zur Transportrichtung eine Online-Überwachung durchgeführt wird.

Zudem umfasst die Erfindung mit, dass Messstellen zur Messung von Prozessparametern vorgesehen sind, die quer zur von der Transportvorrichtung vorgegebenen Transportrichtung des Folienmaterials liegen, und vorzugsweise quer zur Frostlinie liegen. Für die Messung der Prozessparameter kann eine Messeinrichtung vorgesehen sein, die über die Folienbreite quer zur Transportrichtung des Folienmaterials mehrere Prozessparameter misst. Beispielsweise kann die Messeinrichtung mehrere Sensoren aufweisen, die jeweils an den jeweiligen Messstellen die Prozessparameter messen. Alternativ ist es ebenfalls im Rahmen der Erfindung denkbar, dass die Messeinrichtung traversierend über die Breite des Folienmaterials ausgebildet ist. Bei der traversierenden Messeinrichtung ist es erfindungsgemäß realisierbar, dass über die gesamte Breite des Folienmaterials Prozessparameter ermittelt werden, die für die Berechnung der Relaxationsgröße ihre Verwendung finden.

Vorteilhafterweise wird zu jeder Messstelle eine jeweilige Relaxationsgröße berechnet, um über die Breite der Folie eine Online-Überwachung der Folienqualität zu erhalten.

Erfindungsgemäß kann der Prozessparameter die Temperatur des Folienmaterials sein. Da die Relaxation stark temperaturabhängig ist, ist es vorteilhaft die Temperatur des Folienmaterials als Prozessparameter zu messen. Anschließend kann die Relaxationsgröße, insbesondere die relative Relaxation zu jeder Messstelle berechnet werden, wobei erfindungsgemäß eine Vielzahl an Relaxationen für die Relaxationsgröße und/oder die relative Relaxationsgröße berücksichtigt werden, wobei insbesondere die Relaxationen anfangend von der Relaxation aus der Schmelzefahne in Transportrichtung bis zu Frostlinie und/oder bis kurz vor oder nach der Frostlinie in der Relaxationsgröße, insbesondere in der relativen Relaxationsgröße berücksichtigt werden. Das in dem erfindungsgemäßen Verfahren integrierte Prozessmodell ermittelt eine Aussage über die relative Relaxationsgröße der erstarrten Folie, anhand dieser eine Aussage über die Qualität der gerade hergestellten Folie gemacht werden kann.

In einem erfindungsgemäßen Verfahren kann gemäß Schritt c) die Relaxationsgröße zumindest abhängig von der Position der Frostlinie und dem mindestens einen Prozessparameter sein. Des Weiteren umfasst das erfindungsgemäße Verfahren, dass gemäß Schritt c) zu jeder Messstelle eine Relaxationsgröße ermittelt wird, wobei im Schritt d) die einzelnen Relaxationsgrößen in Korrelation zu Prozessgrenzen gebracht werden. Beispielsweise ist es denkbar, dass zunächst die Position der Frostlinie entlang der Folienbreite bestimmt wird, wobei die Position anschließend in dem erfindungsgemäßen Verfahren hinterlegt bzw. abgespeichert wird. Anhand der Frostlinienposition sowie weiteren gemessenen Prozessparametern oder vorher eingegebenen Prozessparametern kann die Relaxationsgröße, insbesondere die relative Relaxationsgröße als Trendfunktion über die Zeit dargestellt werden. Zusätzlich ist es denkbar, dass die gegebenenfalls zeitliche Veränderung der Frostlinienposition über eine kontinuierliche Messung der Folientemperatur kurz hinter der Frostlinie erfasst wird. Eine "geometrische" Änderung der Frostlinie über die Breite kann über die Messeinrichtung erfasst werden. Da im Schritt d) die einzelnen relativen Relaxationsgrößen in Korrelation zu Prozessgrenzen gebracht werden, kann sehr schnell und einfach dem Bediener einer Folienmaschine visualisiert werden, wann die relativen Relaxationsgrößen der jeweiligen Messstelle, d. h. die über der Folienbreite verteilt sind, über eine definierte Zeit ausreichend konstant sind und/oder nahezu gleich groß sind. Dieses kann z. B. über Einrichtungsgrenzen definiert werden, die eine Aussage bei der Überprüfung geben, inwieweit eine Konstanz der Relaxationsgrößen vorliegt und/oder die relativen Relaxationsgrößen untereinander innerhalb definierter Grenzen liegen.

Das erfindungsgemäße Verfahren kann vorsehen, dass bevor der eigentliche Herstellungsprozess der Kunststofffolie gestartet wird, der Einrichtungsprozess so lange durchgeführt wird, bis die Relaxationsgrößen innerhalb von den Einrichtungsgrenzen liegen, insbesondere wenn das Ende des Einrichtungsprozesses erreicht ist, Prozessdaten von Prozessparametern gespeichert werden. Die Prozessdaten können z. B. die Schmelzetemperatur, die Transportgeschwindigkeit des Folienmaterials, insbesondere die Geschwindigkeit der Gießwalze, der Massenstrom der Schmelze, das Vakuum am Schmelzevorhang etc. sein. Somit kann ein "Fingerabdruck" sämtliche Prozessdaten des Folienproduktes gespeichert werden. Ebenfalls ist es denkbar, dass nach dem Einrichtungsprozess auch ein Abgleich mit offlinegemessenen mechanischen Kennwerten aus dem Labor erfolgt.

Erfindungsgemäß kann das Verfahren mitumfassen, dass nach dem Einrichtungsprozess ein Kalibrierungsvorgang in einer definierten Kalibrierungszeit erfolgt, insbesondere bei dem die Prozessgrenzen ermittelt oder neu ermittelt werden. Nach dem Einrichtungsprozess liegt erfindungsgemäß ein Prozess vor, der für den jeweiligen Kunden bzw. die Applikation einer ausreichenden Konstanz der Relaxationsgröße, insbesondere der relativen Relaxationsgröße über die Zeit und Folienbreite verfügt. Sobald also durch den Benutzer die Prozessdaten von Prozessparametern, insbesondere die Rezeptur gespeichert wird, kann ein vorher definierter Kalibrierungsvorgang starten, in dem das Verfahren alle relevanten Prozessparameter aufnimmt und berechnet, insbesondere die relative Relaxationsgröße über die Folienbreite und Zeit. Bei dem Kalibrierungsvorgang werden neue Prozessgrenzen ermittelt bzw. neu ermittelt, wobei die Prozessgrenzen Relaxationsgrenzen sein können. Beispielsweise ist es denkbar, dass nach Ablauf der Kalibrierungszeit, die beispielsweise mehrere Minuten, beispielsweise 5 Minuten ≤ Zeit ≤ 80 Minuten oder 1 Stunde ≤ Zeit ≤ 5 Stunden betragen kann, eine Mittelwert, eine minimale und eine maximale relative Relaxation bestimmt wird und anschließend alle neu ermittelten Werte zu diesem Wert ins Verhältnis gesetzt werden. Ab diesem Zeitpunkt kann eine Trendfunktion für die Online-Überwachung zum Tragen kommen, die sich aus dem Verhältnis aus O (aktuell) zu O mittel (Mittelwert) zusammensetzt. Solange dieses Verhältnis sich in den zuvor ermittelten Grenzen, minimale und maximale relative Relaxation, bewegt, können alle produzierten Folien durch das erfindungsgemäße Verfahren als Gutfolien bestimmt werden. Werden die o. g. Grenzen verletzt, ist es denkbar, dass das erfindungsgemäße Verfahren diese Folie als Schlechtfolie erkennt.

Ebenfalls ist es denkbar, dass diese Folie zunächst als eine Folie erkannt wird, die die o. g. Grenzen verletzt. An dieser Stelle ermöglicht das erfindungsgemäße Verfahren, dass diese Folie in einem Offlineverfahren im Labor untersucht wird. Wird aus dem Labor eine gute Qualität zurückgemeldet, ist es denkbar, dass die Prozessgrenzen verändert werden, insbesondere der Bereich zwischen den Prozessgrenzen vergrößert wird. Die Veränderung der Prozessgrenzen kann automatisch oder manuell durch den Bediener der Folienmaschine erfolgen.

Ebenfalls ist es denkbar, dass während des Kalibrierungsprozesses auch sämtliche Prozessparameter kalibriert werden, die den Herstellungsprozess bestimmen und/oder für den Herstellungsprozess relevant sind. Das heißt, dass unter anderem die Schmelzetemperatur, die Transportgeschwindigkeit, insbesondere die Geschwindigkeit des Chill Rolls, der Massenstrom der Schmelze, das Vakuum am Schmelzevorhang etc. kalibriert werden. Das bedeutet, dass z. B. eine Kalibrierung erfolgt, bei der ein Mittelwert, ein minimaler und ein maximaler Wert bestimmt werden. Somit können detaillierte Prozessgrenzen der Prozessparameter während eines Kalibrierungsvorganges ermittelt werden. Erfindungsgemäß kann das Verfahren umfassen, dass, falls die Relaxationsgröße, insbesondere die relative Relaxationsgröße außerhalb der Prozessgrenzen liegt, ermittelt wird, ob ein Prozessparameter außerhalb seiner detaillierten Prozessgrenzen liegt. Somit ist es denkbar, dass durch die Verwendung von kalibrierten Prozessparametern bei einem Überschreiten der Prozessgrenzen bei der Relaxationsgröße dem Benutzer oder dem Verfahren ein Hinweis gegeben wird, welcher der detaillierten Prozessgrenzen zum Überschreiten der Prozessgrenzen geführt hat. Das bedeutet, dass zumindest eine der detaillierten Prozessgrenzen verletzt sein könnte, welches die Ursache einer Verletzung der Prozessgrenzen bezogen auf die Relaxationsgröße haben könnte. Das erfindungsgemäße Verfahren kann eine Steuerung und/oder Regelung mitumfassen, damit es zu einer Nichtverletzung der Prozessgrenzen führt.

Des Weiteren kann die Erfindung ein erfindungsgemäßes Verfahren bereitstellen, bei dem über eine Displayeinheit die Relaxationsgrößen und/oder die Prozessgrenzen und/oder die detailliierten Prozessgrenzen und/oder die Einrichtungsgrenzen und/oder die Prozessparameter angezeigt werden und/oder veränderbar sind. Zudem ist es denkbar, dass der Herstellungsprozess bereits während des Kalibrierungsvorganges erfolgt. Hierdurch wird eine hohe Effizienz im Herstellungsprozess einer Kunststofffolie erzielt. Über die Displayeinheit erhält der Benutzer einer Folienmaschine eine aktuelle Information der Folienqualität, die in diesem Zeitpunkt produziert wird und kann sofort einwirken, wann die genannten Prozessgrenzen verletzt werden. Ein Vorteil des erfindungsgemäßen Verfahrens ist, dass dieses die Möglichkeit hat selbstlernend zu sein. Beispielsweise über offlinegemessene Kennwerte aus dem Labor lassen sich die Prozessgrenzen verändern.

In einer weiteren die Erfindung verbessernden Maßnahme ist es denkbar, dass eine Analyse der mechanischen Eigenschaften der Folie offline erfolgen kann, beispielsweise mittels eines Highlight-Tests. Es können beispielsweise die gemessenen Werte, insbesondere die maximale Dehnung sowie die Kraft bei einer bestimmten Dehnung, z. B. 70% von maximaler Dehnung, mit der onlinebestimmten Relaxationsgröße korreliert werden. Dazu kann eine Regressionsfunktion mit den eingegebenen Daten gespeist werden und eine Korrelationsgüte bestimmt werden. Ab einer gewissen Korrelationsgüte ist ein Umschalten der Trendfunktion auf eine prognostizierte Dehnung oder Kraft möglich. In einer weiteren Ausgestaltung der Erfindung kann eine direkte Kopplung mit dem Offlinetest erfolgen, sodass über die Eingabe des jeweiligen Rollenkennzeichens, an dem das produzierte Folienmaterial sich befindet, eine direkte Zuordnung und Übertragung der Werte erfolgen kann.

Des Weiteren umfasst das erfindungsgemäße Verfahren, dass sämtliche Prozessdaten der Prozessparameter sowie Relaxationsgrößen bezogen auf das jeweilige Folienmaterial, das sich auf einer Rolle befindet, gespeichert und/oder weiter übermittelt werden können, insbesondere auch an einen Wickelroboter, um diesen mit der exakt vorhandenen und bestimmten Dehnfähigkeit der momentan verwendeten Folie zu versorgen, sodass vorzugsweise immer exakt die richtige Haltekraft durch eine entsprechende Variation der entsprechenden Dehnung abhängig von der zugeordneten Dehnfähigkeit der Folie vom Wickelroboter einsetzbar ist.

Ebenfalls Gegenstand der vorliegenden Erfindung ist eine Folienmaschine mit einer Vorrichtung zur Online-Überwachung einer Folienqualität bei einem Herstellungsprozess einer Kunststofffolie. Bei dieser Folienmaschine ist ein Folienmaterial aus einer Auslassvorrichtung in Form einer Schmelzefahne durch eine Transportvorrichtung herausführbar oder herausziehbar, um das Folienmaterial vor oder an der Transportvorrichtung abzukühlen bis das Folienmaterial erstarrt. Die Folienmaschine weist mindestens eine Messeinrichtung zur Bestimmung einer Position einer Frostlinie auf, bei der das Folienmaterial erstarrt, und zur Messung mindestens eines in der Nähe der Frostlinie vorliegenden Prozessparameters des erstarrenden Folienmaterials. Die Messung des Prozessparameters kann vor oder an oder nach der Frostlinie erfolgen. Des Weiteren weist die erfindungsgemäße Folienmaschine mindestens eine Auswerteeinheit zur Berechnung mindestens einer Relaxationsgröße auf, die die Relaxationen der Molekülorientierung des Folienmaterials berücksichtigt, wobei die Auswerteeinheit zudem überprüft, inwieweit die mindestens eine Relaxationsgröße innerhalb von Prozessgrenzen liegt. Die Relaxationsgröße ist vorteilhafterweise eine Werteschaar von berechneten Relaxationen, insbesondere relativen Relaxationen über die Folienbreite und die Zeit, insbesondere von der Schmelzefahne bis zur Frostlinie des Folienmaterials. Die Folienmaschine bringt die gleichen Vorteile mit sich, wie sie ausführlich mit Bezug auf das erfindungsgemäße Verfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen schematisch:

Fig. 1     eine Ausführungsform einer erfindungsgemäßen Folienmaschine,

Fig. 2     eine Ausführungsform zur Online-Überwachung einer Folienqualität bei einem Herstellungsprozess einer Kunststofffolie gemäß Figur 1,

Fig. 3     eine mögliche Ausführungsform zur Überprüfung und Ermittlung, wann ein Einrichtungsprozess für die Folienmaschine erreicht ist,

Fig. 4     eine weitere Ausführungsform zur Überprüfung, wann Prozessgrenzen beim Herstellungsprozess einer Kunststofffolie eingehalten bzw. überschritten sind,

Fig. 5 eine Ausführungsform zur Schaffung einer Korrelationsgüte beim Herstellungsprozess einer Kunststofffolie und

Fig. 6 eine Möglichkeit zur Online-Überwachung einer Folienqualität in einer Folienmaschine, wobei anstelle der gesamten Folienbreite die Breite der einzelnen Foliennutzen berücksichtigt wird.

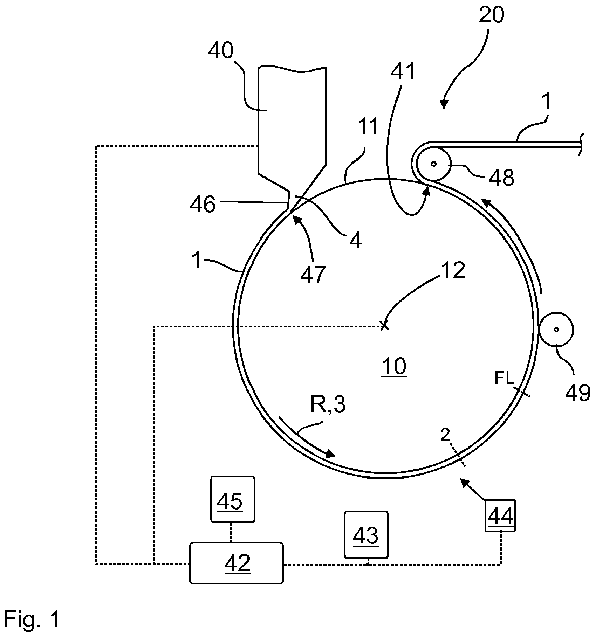

Figur 1 zeigt schematisch eine Folienmaschine 20 bzw. eine Gießfolienmaschine, die eine Transportvorrichtung 10 aufweist, welche rotierbar gelagert ist. Bei der Transportvorrichtung 10 handelt es sich um ein Chill Roll 10. Über eine Auslassvorrichtung 40, welcher z. B. eine oder mehrere Extrudervorrichtungen vorgelagert sind, wird fließfähiges Folienmaterial 1 über einen Auslassspalt 46 auf die Oberfläche 11 des Chill Rolls 10 angeordnet. Das Chill Roll 10 ist dabei gekühlt ausgebildet, sodass über die Kontaktlänge eine Kühlrate und damit ein Abkühlen des Folienmaterials 1 zu Verfügung gestellt wird. Am Abzugsort 41, welcher zusammen mit dem Aufnahmeort 47 einen Umschlingungswinkel $\alpha$ ergibt, wird über eine Abrisswalze 48 nun das erstarrte Folienmaterial 1 von dem Chill Roll 10 abgehoben.

Gemäß Figur 1 ist es beispielsweise denkbar, dass eine Putzwalze 49 das Folienmaterial 1 kontaktiert. Diese Kontaktierung dient dazu, entsprechende Verschmutzungen abzufördern. Die Putzwalze 49 ist mit einem nicht explizit dargestellten Verstellmechanismus versehen, welcher sowohl eine Umfangsverstellung um das Chill Roll 10 als auch eine Radialverstellung zur Chill Roll Achse 12 aufweist. Das Folienmaterial 1 verlässt die Auslassvorrichtung 40 in Form einer Schmelzefahne 4. In Transportrichtung R der Transportvorrichtung 10 kühlt sich das Folienmaterial 1 ab, bis es an einer Frostlinie FL erstarrt. Die Ermittlung der Frostlinie FL erfolgt über eine Temperaturbestimmung des Folienmaterials 1 gemäß des gezeigten Ausführungsbeispiels.

Zur Feststellung der Qualität während der Online-Überwachung in der Folienmaschine wird eine relative Relaxationsgröße als Kennwert herangezogen, die eine Aussage über die relative Molekülorientierung der eingefrorenen Folie für das erfindungsgemäße Verfahren zur Verfügung stellt. Die relative Relaxation ist temperaturabhängig, wobei der Umfangswinkel vom Auftreffen der Schmelzefahne 4 auf dem Chill Roll 10 bis zum Erreichen der Frostlinie FL in eine geeignete Anzahl voll Segmenten unterteilt und jedem Segment eine Verweilzeit sowie eine nominale Relaxationszeit zugeordnet wird. So kann eine relative Relaxationsgröße auf dem Chill Roll abgebildet und/oder berechnet werden, welches über ein Prozessmodell erfolgt.

Um die Frostlinie FL zu bestimmen, können mehrere Messstellen entlang der Breite des Folienmaterials 1 berücksichtigt werden.

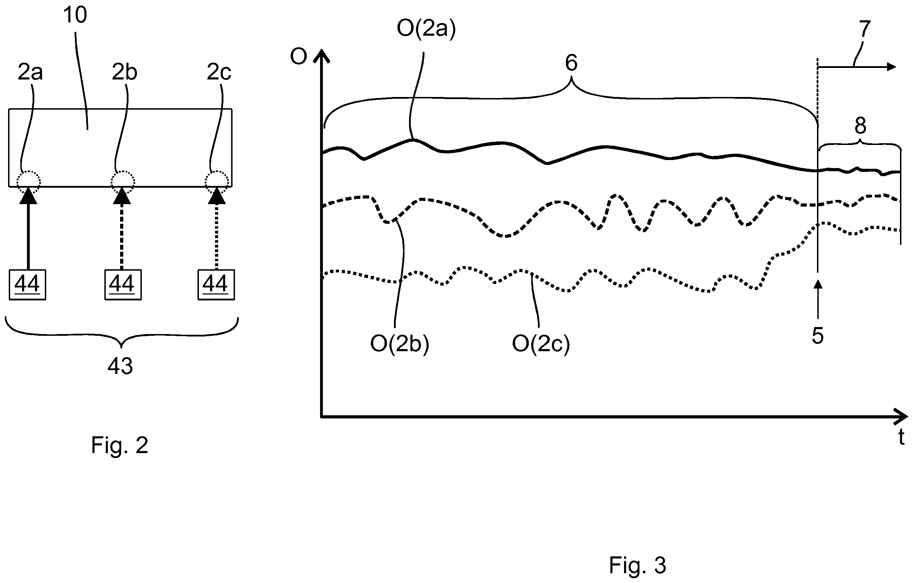

Das dargestellte Ausführungsbeispiel offenbart, dass mehrere relative Relaxationsgrößen berechnet werden, die sich auf unterschiedliche Breitenpositionen des Folienmaterials beziehen. Gemäß Figur 2 ist gezeigt, dass mehrere Messstellen 2 am Chill Roll 10 vorhanden sind, um quer zur Frostlinie FL Prozessparameter P, insbesondere die Temperatur des Folienmaterials 1 zu messen. Anschließend erfolgt über das Prozessmodell des erfindungsgemäßen Verfahrens die Berechnung der relativen Relaxationsgröße.

In Figur 3 ist schematisch gezeigt, wie ein Einrichtungsprozess des erfindungsgemäßen Verfahrens zeitlich bezogen auf drei unterschiedliche relative Relaxationsgrößen verlaufen kann. Anhand der Frostlinienposition, die zuvor gemäß Figur 1 bestimmt worden ist, sowie der weiteren eingegebenen oder von dem erfindungsgemäßen Verfahren selbst zur Verfügung gestellten Parameter wird die relative Relaxationsgröße berechnet und als Trendfunktion über die Zeit dargestellt, welches in Figur 3 zu drei unterschiedlichen Messstellen 2 gezeigt ist. Die Darstellung der Trendfunktionen in dieser Weise ermöglicht dem Bediener oder dem erfindungsgemäßen Verfahren der Folienmaschine, sehr schnell und einfach einen konstanten Prozesspunkt anzufahren, der das Bezugszeichen 5 in Figur 3 trägt. Bevor der eigentliche Herstellungsprozess der Kunststofffolie gestartet wird, wird der Einrichtungsprozess 6 so lange durchgeführt, bis die relativen Relaxationsgrößen innerhalb von Einrichtungsgrenzen E liegen. Die Einrichtungsgrenzen E können z. B. sein, dass die relativen Relaxationsgrößen über die Folienbreite als auch über die Zeit ausreichend konstant und/oder innerhalb von definierten Einreichungsgrenzen liegen. Ebenfalls ist es denkbar, dass ein Abgleich von Offline gemessenen mechanischen Kennwerten aus dem Labor durchgeführt wird, sodass am Ende des Einrichtungsprozesses 6 sämtliche Prozessdaten von Prozessparametern bzgl. des Herstellungsprozesses der Kunststofffolie gespeichert werden.

Nach dem Einrichtungsprozess 6 kann der eigentliche Herstellungsprozess 7 gestartet werden.

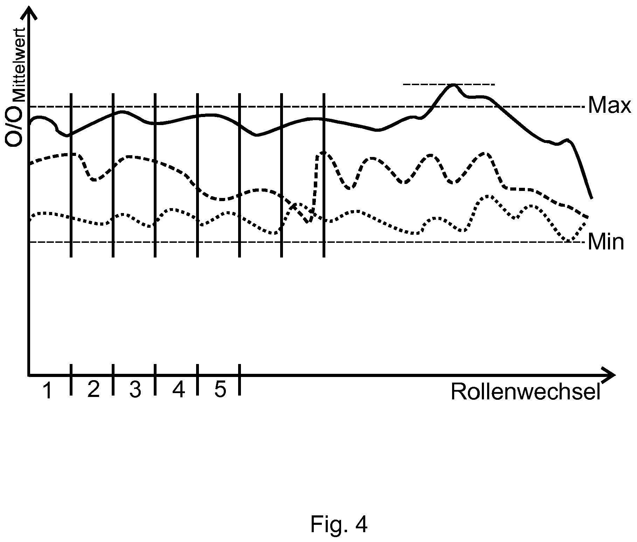

Erfindungsgemäß erfolgt nach dem Einrichtungsprozess 6 ein Kalibrierungsvorgang 8 in einer definierten Kalibrierungszeit, welches ebenfalls in Figur 3 schematisch gezeigt ist. In diesem Kalibrierungszeitraum werden neue Prozessgrenzen G ermittelt, worauf in Figur 4 nun eingegangen wird.

Nach Ablauf der Kalibrierungszeit wird ein Mittelwert, eine minimale und eine maximale relative Relaxationsgröße über die Breite des Folienmaterials und der Zeit bestimmt und anschließend alle neu ermittelten Werte zu diesem Wert ins Verhältnis gesetzt. In Figur 4 ist das Verhältnis aus der relativen Relaxationsgröße O zu $O_{Mittelwert}$ aufgezeigt sowie die einzelnen Rollenwechsel des Folienmaterials 1, welches hergestellt worden ist. Zudem weist die Grafik gemäß Figur 4 die Prozessgrenzen Max. und Min. auf, die durch den Kalibrierungsvorgang 8 ermittelt worden sind. Über die Messung der Temperatur an den unterschiedlichen Messstellen 2 gemäß Figur 2 sind nun exemplarisch drei Trendfunktionen in Figur 4 gezeigt. Befinden sich die Trendfunktionen innerhalb der Prozessgrenzen, ist das Folienmaterial 1 bzgl. des jeweiligen Rollenwechsels ein Gutprodukt. Werden Prozessgrenzen verletzt, sei es nach oben oder nach unten, wird die Qualität des Folienmaterials 1 als Schlechtprodukt durch das Verfahren identifiziert. Das erfindungsgemäße Verfahren kann jedoch derart ausgelegt sein, dass es als selbstlernend weitergebildet ist. Das bedeutet, dass bei einem Schlechtprodukt dieser spezifische Rollenwechsel offline bzgl. seiner mechanischen Eigenschaften überprüft werden kann. Ergibt das Ergebnis der Probe, dass eine gute Qualität dennoch vorliegt, können die Prozessgrenzen erweitert werden, sodass das Prozessfenster gemäß Figur 4 durch Verschieben der Grenzen vergrößert wird.

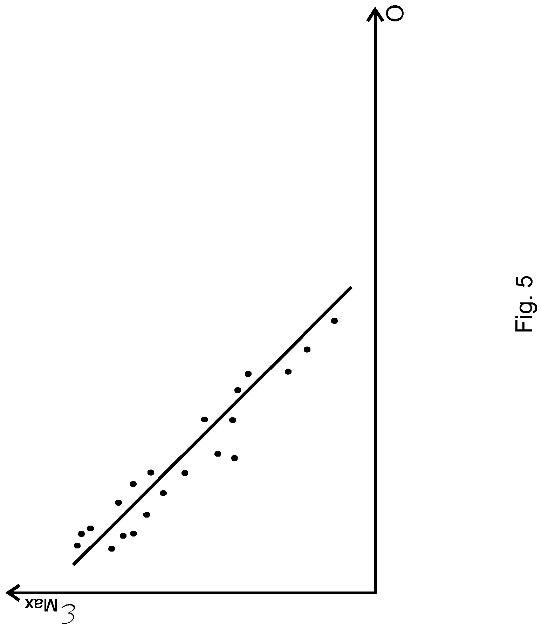

Sofern eine Analyse der mechanischen Eigenschaften erfolgt, können die gemessenen Werte mit der onlinebestimmten relativen Relaxationsgröße korreliert werden, welches beispielsweise über eine Regressionsfunktion gemäß Figur 5 erfolgen kann. Die Regressionsfunktion wird mit den eingegebenen Daten gespeist und die Korrelationsgüte kann bestimmt werden. Ab einer gewissen Korrelationsgüte ist das Umschalten der Trendgrafik auf eine beispielsweise prognostizierte Dehnung oder Kraft möglich. In einer weiteren Ausbaustufe des erfindungsgemäßen Verfahrens kann eine direkte Kopplung mit dem Offlinetest erfolgen, sodass über die Eingabe des jeweiligen Rollenkennzeichens, auf der die produzierte Folie sich befindet, eine direkte Zuordnung und Übertragung der Werte erfolgen kann.

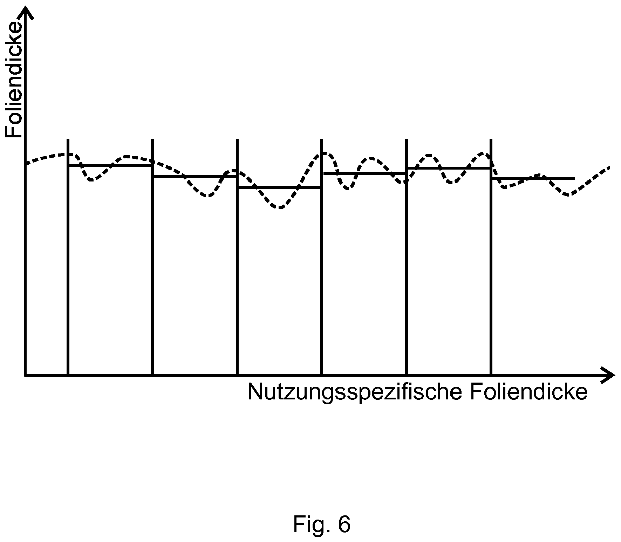

In Figur 6 ist ein weiteres Ausführungsbeispiel des erfindungsgemäßen Verfahrens gezeigt, bei dem die Foliendicke der gesamten Folienmaterialbreite in Korrelation zu den nutzenspezifischen Foliendicken dargestellt ist. Hierbei kann das erfindungsgemäße Verfahren zur Online-Überwachung einer Folienqualität ebenfalls berücksichtigen, dass nur die nutzenspezifische Breite jeweils bei der Überprüfung berücksichtigt wird, inwieweit die relativen Relaxationsgrößen innerhalb von Prozessgrenzen liegen. Dieses hat den Vorteil, dass beispielsweise bestimmte Nutzen einer Kunststofffoliengesamtbreite als Gutprodukt ermittelt werden können, obwohl es über die Gesamtkunststofffolienbreite ein oder mehrere Nutzen geben kann, die beispielsweise Schlechtprodukte sind.

Das erfindungsgemäße Verfahren kann ebenfalls mitumfassen, das während des Kalibrierungsvorganges 8 weitere Prozessparameter mitkalibriert werden, wobei detaillierte Prozessgrenzen der Prozessparameter während des Kalibrierungsvorganges ermittelt werden. Falls ein Prozessparameter gemäß Figur 4 bzgl. der relativen Relaxationsgröße verletzt wird, kann über eine Verletzung einer detaillierten Prozessgrenze ein Hinweis für das Verfahren oder an den Benutzer gegeben werden, welcher der Prozessparameter zum Überschreiten der detaillierten Prozessgrenzen geführt hat. Dieser oder diese Prozessparameter können wieder korrigiert werden, beispielsweise über eine Regel- oder Steuerungseinheit. Ebenfalls kann der Benutzer manuell den Prozessparameter innerhalb der detaillierten Prozessgrenzen korrigieren.

Die gezeigten Ausführungsbeispiele lassen sich auch auf eine nicht explizit dargestellte Blasfolienmaschine beziehen, bei der das Folienmaterial 1 aus einem Blaskopf, der erfindungsgemäß die Auslassvorrichtung 40 ist, von einer beabstandeten Transportvorrichtung 10 herausgezogen wird. In der Regel befindet sich die Transportvorrichtung 10 oberhalb des Blaskopfes, wobei das Folienmaterial über eine seitliche Luftströmung gekühlt wird und in eine Transportrichtung R zur Transportvorrichtung 10 bewegt wird. Hierbei durchläuft das Folienmaterial 1 eine Transportstrecke von der Auslassvorrichtung 40 bis zur Frostlinie FL, wie bei den gezeigten Ausführungsbeispielen. Das gezeigte Verfahren zur Online-Überwachung gemäß den Figuren 1 bis 6 lässt sich ohne Weiteres auch auf die Blasfolienmaschine beziehen. Ein Unterschied ist lediglich, dass das Folienmaterial vor der Transportvorrichtung abkühlt bzw. vor der Transportvorrichtung erstarrt.

## Bezugszeichenliste

| | |
|---|---|
| 1 | Folienmaterial |
| 2 | Messstelle |
| 3 | Transportrichtung |
| 4 | Schmelzefahne |
| 5 | Prozesspunkt |
| 6 | Einrichtungsprozess |
| 7 | Herstellungsprozess |
| 8 | Kalibrierungsvorgang |
| | |
| 10 | Transportvorrichtung, Chill Roll |
| 11 | Oberfläche |
| 12 | Achse |
| | |
| 20 | Folienmaschine |
| | |
| 40 | Auslassvorrichtung |
| 41 | Abzugsort |
| 42 | Auswerteeinheit |
| 43 | Messeinrichtung |
| 44 | Sensoren |
| 45 | Anzeigevorrichtung |
| 46 | Auslassspalt |
| 47 | Aufnahmeort |
| 48 | Abrisswalze |
| 49 | Putzwalze |

## Patentansprüche

1. Verfahren zur Online-Überwachung einer Folienqualität bei einem Herstellungsprozess einer Kunststofffolie, insbesondere einer Blasfolie oder einer Gießfolie, bei der

- Folienmaterial (1) aus einer Auslassvorrichtung (40) in Form einer Schmelzefahne (4) durch eine Transportvorrichtung (10) herausgeführt wird, wobei das Folienmaterial (1) auf oder vor der Transportvorrichtung (10) sich abkühlt,
- das Folienmaterial (1) vor oder an der Transportvorrichtung (10) erstarrt, umfassend folgende Schritte:

a) Bestimmung einer Position einer Frostlinie (FL), bei der das Folienmaterial (1) vor oder an der Transportvorrichtung (10) erstarrt ist,
b) Messung mindestens eines in der Nähe der Frostlinie (FL) vorliegenden Prozessparameters (P) des erstarrenden Folienmaterials (1),

**gekennzeichnet durch** folgende Schritte:

c) Berechnung mindestens einer Relaxationsgröße, die die Relaxationen der Molekülorientierungen des Folienmaterials (1) berücksichtigt,
d) Überprüfung, inwieweit die mindestens eine Relaxationsgröße innerhalb von Prozessgrenzen (G) liegt,

wobei Messstellen (2) zur Messung von Prozessparametern (P) vorgesehen sind, die quer zur von der Transportvorrichtung (10) vorgegebenen Transportrichtung (3) des Folienmaterials (1) liegen, und wobei gemäß Schritt c) zu jeder Messstelle (2) eine Relaxationsgröße berechnet wird, wobei im Schritt d) die einzelnen Relaxationsgrößen in Korrelation zu Prozessgrenzen (G) gebracht werden.

2. Verfahren nach Anspruch 1,
**dadurch gekennzeichnet,**
**dass** die Bestimmung der Position der Frostlinie (FL) gemäß Schritt a) zumindest teilweise mittels einer Temperaturbestimmung des Folienmaterials (1) erfolgt.

3. Verfahren nach Anspruch 1 oder 2,
**dadurch gekennzeichnet,**
**dass** mehrere Messstellen (2) vorgesehen sind, um Prozessparameter (P) zu messen.

4. Verfahren nach einem der vorhergehenden Ansprüche,
**dadurch gekennzeichnet,**
**dass** der Prozessparameter (P) die Temperatur des Folienmaterials (1) ist.

5. Verfahren nach einem der vorhergehenden Ansprüche,

**dadurch gekennzeichnet,**
**dass** gemäß Schritt c) die Relaxationsgröße zumindest abhängig ist von der Position der Frostlinie (FL) und dem mindestens einen Prozessparameter (P).

6. Verfahren nach einem der vorhergehenden Ansprüche,
**dadurch gekennzeichnet,**
**dass** eine Vielzahl an Relaxationen für die Relaxationsgröße berücksichtigt werden, insbesondere anfangend von der Relaxation aus der Schmelzefahne (4) in Transportrichtung (3) bis zur Frostlinie (FL) und /oder bis kurz vor oder nach der Frostlinie (FL).

7. Verfahren nach einem der vorhergehenden Ansprüche,
**dadurch gekennzeichnet,**
**dass** bevor der eigentliche Herstellungsprozess der Kunststofffolie gestartet wird, ein Einrichtungsprozess (6) so lange durchgeführt wird, bis die Relaxationsgrößen innerhalb von Einrichtungsgrenzen (E) liegen, insbesondere wenn das Ende des Einrichtungsprozesses (6) erreicht ist, Prozessdaten von Prozessparametern gespeichert werden.

8. Verfahren nach Anspruch 7,
**dadurch gekennzeichnet,**
**dass** nach dem Einrichtungsprozess (6) ein Kalibrierungsvorgang (8) in einer definierten Kalibrierungszeit erfolgt, insbesondere bei dem die Prozessgrenzen (G) ermittelt oder neu ermittelt werden.

9. Verfahren nach einem der vorhergehenden Ansprüche,
**dadurch gekennzeichnet,**
**dass** die Relaxationsgrößen kalibriert werden und/oder die Prozessparameter () kalibriert werden, die den Herstellungsprozess bestimmen und/oder für den Herstellungsprozess relevant sind.

10. Verfahren nach einem der vorhergehenden Ansprüche,
**dadurch gekennzeichnet,**
**dass** die Prozessgrenzen (G) Relaxationsgrenzen sind und/oder dass detaillierte Prozessgrenzen (Gd) der Prozessparameter (P) während eines Kalibrierungsvorganges (8) ermittelt werden.

11. Verfahren nach einem der vorhergehenden Ansprüche,
**dadurch gekennzeichnet,**
**dass** der Herstellungsprozess bereits während des Kalibrierungsvorganges (8) erfolgt.

12. Verfahren nach einem der vorhergehenden Ansprüche,
**dadurch gekennzeichnet,**
**dass**, falls die Relaxationsgröße außerhalb der Prozessgrenzen (G) liegt, ermittelt wird, ob ein Prozessparameter (P) außerhalb seiner detaillierten Prozessgrenzen (Gd) liegt, insbesondere dass der Prozessparameter (P) automatisch oder manuell variiert wird, so dass der Prozessparameter (P) wieder innerhalb der detaillierten Prozessgrenzen (Gd) liegt.

13. Verfahren nach einem der vorhergehenden Ansprüche,
**dadurch gekennzeichnet,**
**dass** die Prozessgrenzen (G) veränderbar sind, insbesondere nach einer OfflineÜberprüfung der Folienqualität, wobei insbesondere der Bereich zwischen den Prozessgrenzen (G) vergrößerbar ist.

14. Verfahren nach einem der vorhergehenden Ansprüche,
**dadurch gekennzeichnet,**
**dass** über eine Displayeinheit (45) die Relaxationsgrößen und/oder die Prozessgrenzen (G) und/oder die detailliierten Prozessgrenzen (G) und/oder die Einrichtungsgrenzen (E) und/oder die Prozessparameter (P) angezeigt werden und/oder veränderbar sind.

15. Folienmaschine (20) mit einer Vorrichtung, die dazu ausgebildet ist, eine Online-Überwachung einer Folienqualität bei einem Herstellungsprozess einer Kunststofffolie mit einem Verfahren gemäß einem der Ansprüche 1 bis 14 durchzuführen, wobei bei der Folienmaschine (20)

- Folienmaterial (1) aus einer Auslassvorrichtung (40) in Form einer Schmelzefahne (4) durch eine Transportvorrichtung (10) herausführbar ist, um das Folienmaterial (1) vor oder an der Transportvorrichtung (10) abzukühlen bis das Folienmaterial (1) erstarrt, mit
- mindestens einer Messeinrichtung (43) zur Bestimmung einer Position einer Frostlinie (FL), bei der das Folienmaterial (1) erstarrt ist, und zur Messung mindestens eines in der Nähe der Frostlinie (FL) vorliegenden Prozessparameters (P) des erstarrenden Folienmaterials (1),

**gekennzeichnet durch** mindestens eine Auswerteeinheit (42), die zur Berechnung mindestens einer Relaxationsgröße, die die Relaxationen der Molekülorientierungen des Folienmaterials (1) berücksichtigt, und zur Überprüfung, inwieweit die mindestens eine Relaxationsgröße innerhalb von Prozessgrenzen (G) liegt, eingerichtet ist.

16. Folienmaschine (20) nach Anspruch 15,
**dadurch gekennzeichnet,**
**dass** die Messeinrichtung (43) zur Messung von Prozessparametern (P) derart ausgeführt ist, dass mehrere Messstellen (2) vorhanden sind, um über die Folienbreite quer zur Transportrichtung (R) des Folienmaterials (1) mehrere Prozessparameter (P) zu messen, und/oder dass die Messeinrichtung (43) mehrere Sensoren (44) aufweist, um die Temperatur des Folienmaterials (1) zu bestimmen.

17. Folienmaschine (20) nach einem der vorhergehenden Ansprüche,
**dadurch gekennzeichnet,**
**dass** die Messeinrichtung (43) traversierend über die Breite des Folienmaterials (1) ausgebildet ist.

**Claims**

1. A method for the online monitoring of film quality during a production process of a plastic film, in particular a blown film or a cast film, in which

- film material (1) is fed out of an outlet device (40) in the form of a melt lug (4) by a transport device (10), wherein the film material (1) is cooled on or in front of the transport device (10),
- the film material (1) solidifies in front of or on the transport device (10), comprising the following steps:

a) Determining a position of a frost line (FL) in which the film material (1) is solidified in front of or on the transport device (10),
b) measuring at least one process parameter (P) of the solidifying film material (1) present in the vicinity of the front line (FL),

**characterized by** the following steps:

c) calculating at least one relaxation variable, which takes into account the relaxations of the molecular orientations of the film material (1),
d) checking to what extent the at least one relaxation variable lies within process limits (G),

wherein measuring points (2) for measuring process parameters (P) are provided, which lie transversely to the transport direction (3) of the film material (1) predetermined by the transport device (10), and wherein according to step c) a relaxation variable is calculated for each measuring point (2), wherein in step d) the individual relaxation variables are brought into correlation to process limits (G).

2. The method according to claim 1,
**characterized in**
**that** the determination of the position of the frost line (FL) according to step a) is made at least partially by means of a temperature determination of the film material (1).

3. The method according to claim 1 or 2, **characterized in** **that** a plurality of measuring points (2) are provided, in order to measure process parameter (P).

4. The method according to any one of the preceding claims, **characterized in** **that** the process parameter (P) is the temperature of the film material (1).

5. The method according to any one of the preceding claims, **characterized in** **that** according to step c) the relaxation variable is at least dependent on the position of the frost line (FL) and the at least one process parameter (P).

6. The method according to any one of the preceding claims, **characterized in** **that** a plurality of relaxations for the relaxation variable are taken into account, in particular starting from the relaxation from the melt lug (4) in the transport direction (3) up to the frost line (FL) and/or until shortly before or after the frost line (FL).

7. The method according to any one of the preceding claims, **characterized in** **that** before the actual production process of the plastic film is started, a setup process (6) is carried out until the relaxation variables lie within device limits (E), in particular when the end of the setup process (6) is reached, process data of process parameters are stored.

8. The method according to claim 7, **characterized in** **that** after the setup process (6) a calibration process (8) takes place in a defined calibration time, in particular, in which the process limits (G) are determined or re-determined.

9. The method according to any one of the preceding claims, **characterized in** **that** the relaxation variables are calibrated and/or the process parameters () are calibrated, which determine the production process and/or are relevant to the production process.

10. The method according to any one of the preceding claims, **characterized in**

**that** the process limits (G) are relaxation limits and/or that detailed process limits (Gd) of the process parameters (P) are determined during a calibration process (8).

11. The method according to any one of the preceding claims, **characterized in** **that** the production process already takes place during the calibration process (8).

12. The method according to any one of the preceding claims, **characterized in** **that** if the relaxation variable lies outside the process limits (G), it is determined whether a process parameter (P) lies outside its detailed process limits (Gd), in particular that the process parameter (P) is varied automatically or manually, so that the process parameter (P) again lies within the detailed process limits (Gd).

13. The method according to any one of the preceding claims, **characterized in** **that** the process limits (G) can be changed, in particular after an offline check of the film quality, wherein in particular the region between the process limits (G) can be enlarged.

14. The method according to any one of the preceding claims **characterized in** **that** the relaxation variables and/or the process limits (G) and/or the detailed process limits (G) and/or the device limits (E) and/or the process parameters (P) are displayed and/or can be changed via a display unit (45).

15. A film machine (20) with a device, which is designed to carry out an online monitoring of film quality during a production process of a plastic film with a method according to any one of claims 1 to 14, wherein in the film machine (20)

   - film material (1) is fed out of an outlet device (40) in the form of a melt lug (4) by a transport device (10), in order to cool the film material (1) in front of or on the transport device (10) until the film material (1) solidifies,

   having

   - at least one measuring device (43) for determining a position of a frost line (FL), in which the film material (1) is solidified, and for measuring at least one process parameter (P) of the solidifying film material (1) present in the vicinity of the frost line (FL), **characterized by** at least one evaluation unit (42), which is set up to calculate at least one relaxation variable, which takes into account the relaxations of the molecular orientations of the film material (1), and to check to what extent the at least one relaxation variable lies within process limits (G).

16. The film machine (20) according to claim 15, **characterized in that** the measuring device (43) for measuring process parameters (P) is designed in such a manner that a plurality of measuring points (2) is present in order to measure a plurality of process parameters (P) across the film width transversely to the transport direction (R) of the film material (1), and/or that the measuring device (43) has a plurality of sensors (44), in order to determine the temperature of the film material (1).

17. The film machine (20) according to any one of the preceding claims, **characterized in that** the measuring device (43) is designed so as to traverse the width of the film material (1).

**Revendications**

1. Procédé de surveillance en ligne de la qualité d'un film lors du processus de fabrication d'un film de matière plastique, plus particulièrement d'un film soufflé ou d'un film coulé, dans lequel

   - un matériau en forme de film (1) est guidé hors d'un dispositif de sortie (40) sous la forme d'une bande de matériau en fusion (4) par un dispositif de transport (10), dans lequel le matériau en forme de film (1) se refroidit sur ou avant le dispositif de transport (10),
   - le matériau en forme de film (1) se solidifie avant ou au niveau du dispositif de transport (10),

   comprenant les étapes suivantes :

   a) détermination d'une position d'une ligne de gel (FL) au niveau de laquelle le matériau en forme de film (1) se solidifie avant ou au niveau du dispositif de transport (10),
   b) mesure d'au moins d'un paramètre de processus (P) du matériau en forme de film (1) en cours de solidification, existant à proximité de la ligne de gel (FL), **caractérisé par** les étapes suivantes :
   c) calcul d'au moins une grandeur de relaxation, qui prend en compte les relaxations des orientations moléculaires du matériau en forme de film (1),

d) vérification dans quelle mesure l'au moins une grandeur de relaxation se trouve à l'intérieur de limites de processus (G),

dans lequel des points de mesure (2) sont prévus pour la mesure des paramètres du processus (P), qui sont disposés transversalement par rapport à la direction de transport (3) du matériau en forme de film (1), prédéterminée par le dispositif de transport (10) et dans lequel, selon l'étape c), à chaque point de mesure (2), une grandeur de relaxation est calculée, dans lequel, à l'étape d), les différentes grandeurs de relaxation sont corrélées avec des limites de processus (G).

2. Procédé selon la revendication 1, **caractérisé en ce que** la détermination de la position de la ligne de gel (FL) a lieu selon l'étape a) au partiellement au moyen d'une détermination de la température du matériau en forme de film (1).

3. Procédé selon la revendication 1 ou 2, **caractérisé en ce que** plusieurs points de mesure (2) sont prévus, afin de mesure des paramètres de processus (P).

4. Procédé selon l'une des revendications précédentes, **caractérisé en ce que** le paramètre de processus (P) est la température du matériau en forme de film (1).

5. Procédé selon l'une des revendications précédentes, **caractérisé en ce que** selon l'étape c), la grandeur de relaxation dépend au moins de la position de la ligne de gel (FL) et de l'au moins un paramètre de processus (P).

6. Procédé selon l'une des revendications précédentes, **caractérisé en ce que** une pluralité de relaxations sont prévues pour la grandeur de relaxation, plus particulièrement en partant de la relaxation provenant de la bande de matériau en fusion (4) dans la direction de transport (3) jusqu'à la ligne de gel (FL) et/ou jusqu'à peu avant ou après la ligne de gel (FL).

7. Procédé selon l'une des revendications précédentes, **caractérisé en ce que** avant le démarrage du processus de fabrication proprement dit du film de matière plastique, un processus de configuration (6) est exécuté jusqu'à ce que les grandeurs de relaxation se trouvent à l'intérieur de limites de configuration (E), plus particulièrement, lorsque la fin du processus de configuration (6) est atteinte, les données de processus des paramètres de processus sont enregistrées.

8. Procédé selon la revendication 7,
**caractérisé en ce que**
après le processus de configuration (6), a lieu un processus de calibrage (8) dans un temps de calibrage défini, plus particulièrement dans lequel les limites de processus (G) sont déterminées ou à nouveau déterminées.

9. Procédé selon l'une des revendications précédentes,
**caractérisé en ce que**
les grandeurs de relaxation sont calibrées et/ou les paramètres de processus (), qui déterminent le processus de fabrication et/ou qui sont pertinentes pour le processus de fabrication, sont calibrés.

10. Procédé selon l'une des revendications précédentes,
**caractérisé en ce que**
les limites de processus (G) sont des limites de relaxation et/ou **en ce que** des limites de processus détaillées (Gd) des paramètres de processus (P) sont déterminées pendant un processus de calibrage (8).

11. Procédé selon l'une des revendications précédentes,
**caractérisé en ce que**
le processus de fabrication a lieu pendant le processus de calibrage (8).

12. Procédé selon l'une des revendications précédentes,
**caractérisé en ce que**
si la grandeur de relaxation se trouve hors des limites de processus (G), il est déterminé si un paramètre de processus (P) se trouve hors de ses limites de processus détaillées (Gd), plus particulièrement **en ce que** le paramètre de processus (P) est modifié automatiquement ou manuellement de façon à ce que le paramètre de processus (P) se trouve à nouveau à l'intérieur des limites de processus détaillées (Gd).

13. Procédé selon l'une des revendications précédentes,
**caractérisé en ce que**
les limites de processus (G) peuvent être modifiées, plus particulièrement après un contrôle en ligne de la qualité du film, dans lequel, plus particulièrement la plage entre les limites de processus (G) peut être agrandie.

14. Procédé selon l'une des revendications précédentes,
**caractérisé en ce que**
grâce à une unité d'affichage (45), les grandeurs de relaxation et/ou les limites de processus (G) et/ou les limites de processus détaillées (G) et/ou les limites de configuration (E) et/ou les paramètres de processus (P) sont affichés et/ou peuvent être modifiés.

15. Machine à film (20) avec un dispositif qui est conçu pour effectue un contrôle en ligne de la qualité d'un film lors d'un processus de fabrication d'un film de matière plastique avec un procédé selon l'une des revendications 1 à 14, dans lequel, dans la machine à film (20)

- un matériau en forme de film (1) est guidé hors d'un dispositif de sortie (40) sous la forme d'une bande de matériau en fusion (4) par un dispositif de transport (10), afin de refroidir le matériau en forme de film (1) au niveau du dispositif de transport (10), jusqu'à ce que le matériau de forme de film (1) se solidifie, avec
- au moins un dispositif de mesure (43) pour la détermination d'une position d'une ligne de gel (FL), dans lequel le matériau en forme de film (1) s'est solidifié et pour la mesure d'au moins un paramètre de processus (P) du matériau en forme de film (1) en cours de solidification, à proximité de la ligne de gel (FL),

**caractérisé par** au moins une unité d'analyse (42) qui est conçue pour le calcul d'au moins une grandeur de relaxation, qui prend en compte les relaxations des orientations moléculaires du matériau en forme de film (1) et pour vérifier dans quelle mesure l'au moins une grandeur de relaxation se trouve à l'intérieur de limites de processus (G).

16. Machine à film (20) selon la revendication 15,
**caractérisée en ce que**
le dispositif de mesure (43) est conçu pour la mesure de paramètres de processus (P) de façon à ce que plusieurs points de mesure (2) existent afin de mesurer, sur la largeur du film transversalement par rapport à la direction de transport (R) du matériau en forme de film (1), plusieurs paramètres de processus (P) et/ou **en ce que** le dispositif de mesure (43) comprend plusieurs capteurs (44) afin de déterminer la température du matériau en forme de film (1).

17. Machine à film (20) selon l'une des revendications précédentes,
**caractérisée en ce que**
le dispositif de mesure (43) est disposé de manière traversante sur la largeur du matériau en forme de film (1).

Fig. 1

Fig. 2

Fig. 3

EP 3 307 513 B1

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0522278 A1